# EUROPÄISCHE PATENTANMELDUNG

(11) **EP 2 894 509 A1**
(43) Veröffentlichungstag der Anmeldung: **15.07.2015**
(21) Anmeldenummer: 14193987.6
(22) Anmeldetag: 20.11.2014
(51) Int. Cl.: G02B 27/01

(54) **Blickfeldanzeige für ein Fahrzeug zum Darstellen von Bildinformationen in zwei unabhängigen Bildern für einen Betrachter**

(30) Priorität: 13.01.2014 DE 102014200377
(71) Anmelder: ROBERT BOSCH GMBH, 70442 Stuttgart (DE)
(72) Erfinder: Frederiksen, Annette, 71272 Renningen (DE); Weingarten, Jan, 70839 Gerlingen (DE)

(57) **Zusammenfassung**

Die Erfindung betrifft eine Blickfeldanzeige (100) für ein Fahrzeug (102) zum Darstellen von Bildinformationen in zwei unabhängigen Bildern für einen Betrachter (104). Die Blickfeldanzeige (100) umfasst eine eine Einrichtung (106) zum Bereitstellen von einem ersten Bild der zwei unabhängigen Bilder in einer ersten optischen Achse (110) und von einem zweiten Bild der zwei unabhängigen Bilder in einer von der ersten optischen Achse (110) zumindest abschnittsweise verschiedenen zweiten optischen Achse (112) sowie eine Einrichtung (108) zum Umlenken einer Projektion des ersten Bildes und/oder einer Projektion des zweiten Bildes, wobei die Einrichtung (108) zum Umlenken als zumindest eine teilweise transparente Projektionsfläche ausgebildet ist, die in der ersten optischen Achse (110) des ersten Bildes und/oder in der zweiten optischen Achse (112) des zweiten Bildes angeordnet ist, wobei die Projektion des ersten Bildes entlang der ersten optischen Achse (110) in Richtung des Betrachters gelenkt wird und wobei die Projektion des zweiten Bildes entlang der zweiten optischen Achse (112) in Richtung des Betrachters (104) gelenkt wird.

## Beschreibung

### Stand der Technik

Die vorliegende Erfindung bezieht sich auf eine Blickfeldanzeige für ein Fahrzeug zum Darstellen von Bildinformationen in zwei unabhängigen Bildern für einen Betrachter, auf ein Verfahren zum Herstellen und ein Verfahren zum Betreiben einer entsprechenden Blickfeldanzeige sowie auf ein entsprechendes Verfahren zum Darstellen von Bildinformationen in zwei unabhängigen Bildern für einen Betrachter.

Um Komfort und Sicherheit in modernen Fahrzeugen zu erhöhen, werden seit einiger Zeit immer mehr Fahrzeuge zusätzlich zum normalen Tachometer, im Folgenden auch als Kombigerät bezeichnet, mit einer Blickfeldanzeige ausgestattet. Blickfeldanzeigen werden auch als Head-up Displays (HUDs) bezeichnet. Blickfeldanzeigen sind Systeme, die kleine Flüssigkristallbildschirme (Abmessungen typischerweise 40mm (horizontal) x 20mm (vertikal)) über eine reflektiv ausgeführte Lupenoptik in ein über der Motorhaube schwebendes virtuelles Bild abbilden. Vorteilhaft bieten Blickfeldanzeigen eine erhöhte Fahrsicherheit durch schnelleres Ablesen aufgrund geringerem Winkel zum Fahrgeschehen und einen erhöhten Ablesekomfort durch reduzierte Akkommodationsanstrengungen der Augen eines Betrachters oder Fahrers.

Blickfeldanzeigen sind auf dem Markt mit verschiedenen Technologien oder Eigenschaften. Sogenannte Combiner-HUDs sind Blickfeldanzeigen, die unabhängig von der Windschutzscheibe mittels einer separaten Combiner-Scheibe funktionieren. AR-HUDs sind Blickfeldanzeigen, die mittels kontaktanaloger Darstellung Bildinformationen mit der Straßenszene verschmelzen können. Dabei steht das AR auch für "Augmented Reality" oder "Erweiterte Realität". Weiterhin sind auf dem Consumermarkt LED-basierte Miniprojektoren verfügbar und werden in Zukunft auch Kfz-Anforderungen erfüllen können.

In der WO 1998035260 wird von holografischen Projektionsanzeigen für Fahrzeuge berichtet.

In WO 2009054709 wird von Reflexionshologrammen berichtet, die eine autostereoskopische Darstellung ermöglichen

### Offenbarung der Erfindung

Vor diesem Hintergrund wird mit dem hier vorgestellten Ansatz ein Verfahren zum Darstellen von Bildinformationen in zwei unabhängigen Bildern für einen Betrachter, weiterhin eine Blickfeldeinrichtung für ein Fahrzeug zum Darstellen von Bildinformationen in zwei unabhängigen Bildern für einen Betrachter, das dieses Verfahren verwendet sowie schließlich ein Verfahren zum Betreiben einer Blickfeldeinrichtung für ein Fahrzeug und ein Verfahren zum Herstellen einer Blickfeldeinrichtung für ein Fahrzeug gemäß den Hauptansprüchen vorgestellt. Vorteilhafte Ausgestaltungen ergeben sich aus den jeweiligen Unteransprüchen und der nachfolgenden Beschreibung.

Für Blickfeldanzeigen steht im Bereich der Armaturentafel eines Fahrzeugs nur ein sehr begrenzter Bauraum zur Verfügung. Gleichzeitig ist das Blickfeld oder die sogenannte Eyebox bei Blickfeldanzeigen sehr begrenzt. Das Blickfeld kann erweitert werden durch Hinzufügen einer zweiten Projektion oder Projektionsfläche. Dabei können zwei unterschiedliche Prinzipien für Blickfeldanzeigen kombiniert werden. Somit kann auch eine Vielfalt in der Blickfeldanzeige darstellbarer Funktionen im Vergleich zum Stand der Technik erweitert oder vergrößert werden.

Es wird eine Blickfeldanzeige für ein Fahrzeug zum Darstellen von Bildinformationen in zwei unabhängigen Bildern für einen Betrachter vorgestellt, wobei die Blickfeldanzeige die folgenden Merkmale aufweist:
eine Einrichtung zum Bereitstellen von einem ersten Bild der zwei unabhängigen Bilder in einer ersten optischen Achse und von einem zweiten Bild der zwei unabhängigen Bilder in einer von der ersten optischen Achse zumindest abschnittsweise verschiedenen zweiten optischen Achse; und
eine Einrichtung zum Umlenken einer Projektion des ersten Bildes und/oder einer Projektion des zweiten Bildes, wobei die Einrichtung zum Umlenken als zumindest eine teilweise transparente Projektionsfläche ausgebildet ist, die in der optischen Achse des ersten Bildes und/oder in der optischen Achse des zweiten Bildes angeordnet ist, wobei die Einrichtung zum Umlenken ausgebildet ist, um die Projektion des ersten Bildes entlang der ersten optischen Achse in Richtung des Betrachters auszulenken und wobei die Einrichtung zum Umlenken ausgebildet ist, um die Projektion des zweiten Bildes entlang der zweiten optischen Achse in Richtung des Betrachters auszulenken.

Ein Fahrzeug kann eine Blickfeldanzeige aufweisen. Bei dem Fahrzeug kann es sich um ein Kraftfahrzeug, insbesondere einen Personenkraftwagen oder ein Nutzfahrzeug handeln. Die Blickfeldanzeige kann die Funktionalität eines Head-up-Displays oder Combiner-HUDs umfassen. Somit können mit der Blickfeldanzeige Informationen in ein Sichtfeld eines Insassen eines Fahrzeugs eingeblendet werden. Beispielsweise können Informationen eines Fahrerassistenzsystems in die Sicht des Fahrers beziehungsweise Betrachters eingeblendet werden. Ferner kann die Blickfeldanzeige die Funktionalität eines Kombünstruments aufweisen, mit dem beispielsweise dem Fahrer weitere Informationen angezeigt werden können. Die vorgestellte Blickfeldanzeige ist ausgebildet, ein erstes Bild und ein zweites Bild darzustellen. Das erste Bild und das zweite Bild können voneinander unabhängig sein, das heißt das erste Bild und das zweite Bild können unterschiedliche Bildinformationen aufweisen. Dabei kann die Einrichtung zum Umlenken ausgebildet sein, dass zumindest eines der zwei unabhängigen Bilder für den Betrachter als ein virtuelles Bild erscheint. Somit kann das erste Bild und/oder das zweite Bild entstehen, und für den Betrachter wirken, als ob die über das Bild transportierten Daten vor dem Auge schweben würden. Die Einrichtung zum Umlenken kann eine Projektionsfläche umfassen, beispielsweise eine transparente Fläche beziehungsweise transluzente Fläche oder Fensterfläche, wobei die Blickfeldanzeige ausgebildet sein kann, die Projektionsfläche mit Licht zu beleuchten, sodass zumindest ein Teil des Lichts in die Augen eines Betrachters, der durch die transparente Fläche blickt, gespiegelt wird. Dabei kann das Licht die im ersten Bild und/oder zweiten Bild enthaltene Information transportieren.

Die Einrichtung zum Umlenken kann einen Kombinierer umfassen. Die Einrichtung zum Umlenken kann einen Teilbereich einer Windschutzscheibe des Fahrzeugs als eine Projektionsfläche umfassen. In Fachkreisen ist der Kombinierer auch als Combiner bekannt. Ein Teilbereich der Windschutzscheibe kann speziell ausgerüstet sein oder spezielle Eigenschaften aufweisen, um für die Verwendung als Teil der Einrichtung zum Umlenken optimiert zu sein.

Ferner kann die Einrichtung zum Umlenken ein holografisch-optisches Element umfassen. So kann die Einrichtung zum Umlenken insbesondere eine holografische Streuscheibe umfassen. Ein holografisch-optisches Element wird auch oft mit seiner Abkürzung HOE bezeichnet. Unter einem holografisch-optischen Element oder holografisch-optischem Bauelement kann Element verstanden werden, dessen holografische Eigenschaften für die Optik der Blickfeldanzeige genutzt werden kann. So kann ein holografisch-optisches Bauelement Eigenschaften herkömmliche Linsen, Spiegel und ergänzend oder alternativ Prismen ersetzen. Holografisch-optische Elemente können spezielle Eigenschaften wie zum Beispiel die Selektivität der Farbe und des Einfallswinkels von Licht aufweisen; beispielsweise kann ein holografisch-optisches Element für einen bestimmten Einfallswinkel das Licht umlenken oder streuen, für die anderen Einfallswinkel aber vollkommen transparent sein. Vorteilhaft kann ein holografisch-optisches Element als planarer Spiegel, Hohlspiegel oder als Streuscheibe derart ausgebildet sein, dass das Licht so reflektiert wird, dass der Einfallswinkel anders als der Ausfallswinkel ist. So kann eine Reflexion mit einer Umlenkung oder Streuung (durch Beugung) des Lichtstrahls kombiniert werden.

Ferner kann die Einrichtung zum Bereitstellen einen ersten Bildgeber zum Bereitstellen des ersten Bildes und einen zweiten Bildgeber zum Bereitstellen des zweiten Bildes aufweisen. Alternativ kann die Einrichtung zum Bereitstellen einen ersten Bildgeber zum Bereitstellen des ersten Bildes und des zweiten Bildes und einen Spiegel umfassen. Günstig ist es auch, wenn die Einrichtung zum Bereitstellen einen ersten Bildgeber zum Bereitstellen des ersten Bildes, einen zweiten Bildgeber zum Bereitstellen des zweiten Bildes und einen Spiegel aufweist. Günstig ist es auch, wenn die Einrichtung zum Bereitstellen ein Optikmodul umfasst. Unter einem Optikmodul kann eine bildgebende Einheit wie ein TFT-Display, ein LCD-Display, eine Bildröhre oder ein Projektor verstanden werden.

Die Einrichtung zum Bereitstellen kann einen Bildgeber aufweisen, der ausgebildet ist, das erste Bild und das zweite Bild bereitzustellen. Dabei kann der Bildgeber ausgebildet sein, das erste Bild und das zweite Bild zeitlich abwechselnd und ergänzend oder alternativ das erste Bild und das zweite Bild in zwei voneinander verschiedenen Teilbereichen einer Bildgeberfläche des Bildgebers bereitzustellen. Wenn die zwei Bilder zeitlich abwechselnd bereitgestellt werden, kann der Bildgeber mit einem Spiegel kombiniert werden, der abwechselnd transluzent und spiegelnd ausgebildet ist und synchron mit dem Bildgeber angesteuert werden kann. Wenn der Bildgeber die zwei Bilder in benachbarten Teilbereichen darstellt, kann ein Spiegel im Strahlengang derart angeordnet sein, dass eines der beiden Bilder von dem Spiegel abgelenkt wird und die dem Bild zugeordnete optische Achse einen verschiedenen Strahlengang durchläuft.

Die Einrichtung zum Umlenken kann ein holografisch-optisches Element umfassen. Das holografisch-optische Element kann eine Hohlspiegelfunktion für eine Reflexion des ersten Bildes unter einem ersten Einfallswinkel und eine Streuscheibenfunktion für eine Reflexion des zweiten Bildes unter einem von dem ersten Einfallswinkel verschiedenen zweiten Einfallswinkel aufweisen. Der Einfallswinkel kann einen Winkel zwischen der ersten optischen Achse und/oder der zweiten optischen Achse und einer Oberfläche des holografisch-optischen Elements repräsentieren. Unter einem Einfallswinkel kann ein Rekonstruktionswinkel verstanden werden. So kann ein erstes Bild unter einem ersten Einfallswinkel auf das holografisch-optische Element projiziert werden und ein zweites Bild unter einem zweiten Einfallswinkel, der von dem ersten Einfallswinkel verschieden ist, auf das holografisch-optische Element projiziert werden, und beide Bilder werden in das identische Gesichtsfeld des Betrachters umgelenkt. So kann je nach Winkel der optischen Achse zu einer Oberfläche des holografisch-optischen Elementes dieses unterschiedliche optische Eigenschaften aufweisen.

Ferner kann die Einrichtung zum Umlenken der Projektion ausgebildet sein, das erste Bild und ergänzend oder alternativ das zweite Bild als eine kontaktanaloge Anzeige für den Betrachter darzustellen. Unter einer kontaktanalogen Anzeige kann verstanden werden, dass kontaktanaloge Informationen oder kontaktanaloge Anzeigeelemente einem Fahrer oder Betrachter in seine aktuelle Sicht so eingeblendet werden, dass er das Gefühl hat, als seien sie fester Bestandteil der Umwelt.

Die Einrichtung zum Bereitstellen kann ausgebildet sein, das erste Bild in einem ersten Wellenlängenbereich und das zweite Bild in einem zweiten Wellenlängenbereich bereitzustellen. Dabei können sich der erste Wellenlängenbereich und der zweite Wellenlängenbereich voneinander unterscheiden. Beispielsweise können der erste Wellenlängenbereich und der zweite Wellenlängenbereich im sichtbaren Spektrum des Lichts liegen. Vorteilhaft kann zusammen mit einem holografisch-optischen Element, welches unterschiedliche Eigenschaften je nach Wellenlänge des auftreffenden Lichts aufweist, ein Aspekt der vorliegenden Erfindung umgesetzt werden.

In einer Ausführungsform kann Einrichtung zum Bereitstellen ausgebildet sein, zumindest ein autostereoskopisches Bild zu erzeugen und ergänzend oder alternativ die Einrichtung zum Umlenken autostereoskopisch ausgelegt sein.

Es wird ein Verfahren zum Darstellen von Bildinformationen in zwei unabhängigen Bildern für ein Fahrzeug vorgestellt, wobei das Verfahren die folgenden Schritte umfasst:
Bereitstellen von einem ersten Bild der zwei unabhängigen Bilder in einer ersten optischen Achse und von einem zweiten Bild der zwei unabhängigen Bilder in einer von der ersten optischen Achse zumindest abschnittsweise verschiedenen zweiten optischen Achse; und
Umlenken einer Projektion des ersten Bildes und/oder einer Projektion des zweiten Bildes, wobei die Einrichtung zum Umlenken als zumindest eine teilweise transparente Projektionsfläche ausgebildet ist, die in der optischen Achse des ersten Bildes und/oder in der optischen Achse des zweiten Bildes angeordnet ist, wobei die Projektion des ersten Bildes entlang der ersten optischen Achse in Richtung des Betrachters gelenkt wird und wobei die Projektion des zweiten Bildes entlang der zweiten optischen Achse in Richtung des Betrachters gelenkt wird.

Es wird ein Verfahren zum Herstellen einer Blickfeldanzeige für ein Fahrzeug zum Darstellen von Bildinformationen in zwei unabhängigen Bildern für einen Betrachter vorgestellt, wobei das Verfahren die folgenden Schritte umfasst:
Bereitstellen einer Einrichtung zum Bereitstellen von einem ersten Bild der zwei unabhängigen Bilder in einer ersten optischen Achse und von einem zweiten Bild der zwei unabhängigen Bilder in einer von der ersten optischen Achse zumindest abschnittsweise verschiedenen zweiten optischen Achse sowie einer Einrichtung zum Umlenken einer Projektion des ersten Bildes und/oder einer Projektion des zweiten Bildes, wobei die Einrichtung zum Umlenken als zumindest eine teilweise transparente Projektionsfläche ausgebildet ist; und
Anordnen der Einrichtung zum Bereitstellen und der Einrichtung zum Umlenken, derart, dass die Einrichtung zum Umlenken in der optischen Achse des ersten Bildes und/oder in der optischen Achse des zweiten Bildes angeordnet wird, sodass die Projektion des ersten Bildes entlang der ersten optischen Achse in Richtung des Betrachters gelenkt wird und wobei die Projektion des zweiten Bildes entlang der zweiten optischen Achse in Richtung des Betrachters gelenkt wird.

Auch durch diese Ausführungsvariante der Erfindung in Form eines Verfahrens kann die der Erfindung zugrunde liegende Aufgabe schnell und effizient gelöst werden.

Der hier vorgestellte Ansatz wird nachstehend anhand der beigefügten Zeichnungen beispielhaft näher erläutert. Es zeigen:
- Fig. 1: eine schematische Übersichtsdarstellung einer Blickfeldanzeige in einem Fahrzeug gemäß einem Ausführungsbeispiel der vorliegenden Erfindung;
- Fig. 2: eine schematische Darstellung einer Windschutzscheiben-Blickfeldanzeige;
- Fig. 3: eine schematische Darstellung einer Kombinierer-Blickfeldanzeige;
- Fig. 4: eine schematische Darstellung einer transparenten Holografisches-Element-Projektionsanzeige als eine Scheibenwurzelanzeige;
- Fig. 5: eine schematische Darstellung einer Blickfeldanzeige als eine Kombination einer Windschutzscheiben-Blickfeldanzeige und einer Kombinierer-Blickfeldanzeige gemäß einem Ausführungsbeispiel der vorliegenden Erfindung;
- Fig. 6: eine schematische Darstellung einer Blickfeldanzeige als eine Kombination einer Blickfeldanzeige mit einer separaten, transparenten Holografisches-Element-Projektionsanzeige gemäß einem Ausführungsbeispiel der vorliegenden Erfindung;
- Fig. 7: eine schematische Darstellung einer Blickfeldanzeige als eine Kombination von einer von einem einzigen Projektor angesteuerten Blickfeldanzeige mit einer separaten, transparenten Holografisches-Element-Projektionsanzeige gemäß einem Ausführungsbeispiel der vorliegenden Erfindung;
- Fig. 8: eine schematische Darstellung einer Blickfeldanzeige als eine Kombination von einer Blickfeldanzeige und einer in die Windschutzscheibe integrierten transparenten Holografisches-Element-Projektionsanzeige gemäß einem Ausführungsbeispiel der vorliegenden Erfindung;
- Fig. 9: eine schematische Darstellung einer autostereoskopischen holografischen Projektionsanzeige;
- Fig. 10: eine schematische Darstellung einer Blickfeldanzeige als eine Kombination einer autostereoskopischen holografischen Projektionsanzeige und einer autostereoskopischen Blickfeldanzeige gemäß einem Ausführungsbeispiel der vorliegenden Erfindung;
- Fig. 11: eine schematische Darstellung einer Blickfeldanzeige mit einem in die Windschutzscheibe eingebetteten holografisch-optischen Element gemäß einem Ausführungsbeispiel der vorliegenden Erfindung;
- Fig. 12: ein Kurvenverlauf einer Simulation einer Beugungseffizienz eines holografisch-optischen Elements gemäß einem Ausführungsbeispiel der vorliegenden Erfindung;
- Fig. 13: ein Ablaufdiagramm eines Verfahrens zum Darstellen von Bildinformationen in zwei unabhängigen Bildern für ein Fahrzeug gemäß einem Ausführungsbeispiel der vorliegenden Erfindung; und
- Fig. 14: ein Ablaufdiagramm eines Verfahrens zum Herstellen einer Blickfeldanzeige für ein Fahrzeug zum Darstellen von Bildinformationen in zwei unabhängigen Bildern für einen Betrachter gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

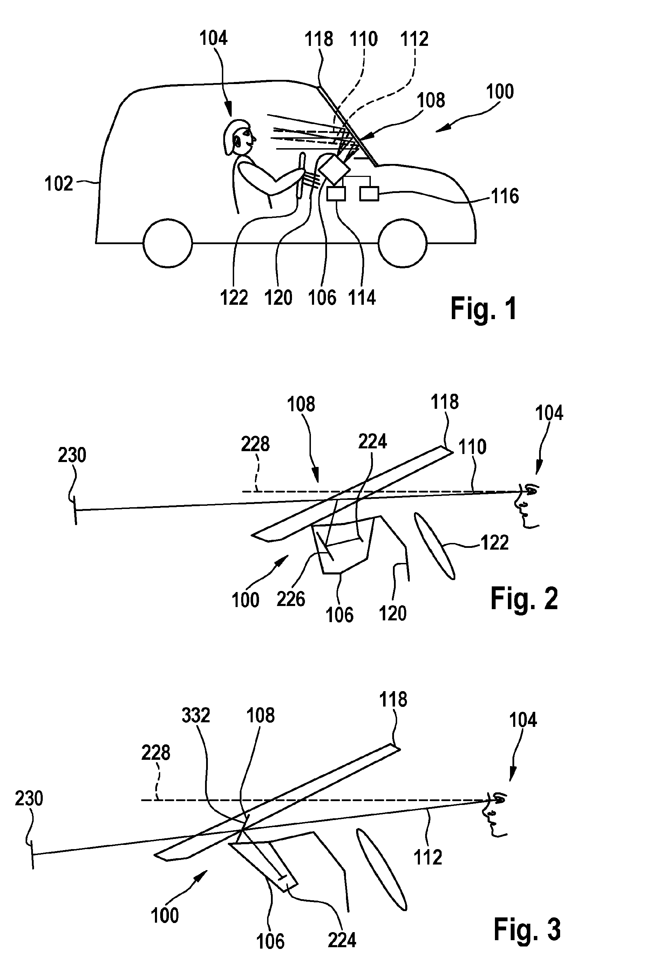

Fig. 1 zeigt eine schematische Übersichtsdarstellung einer Blickfeldanzeige 100 in einem Fahrzeug 102 gemäß einem Ausführungsbeispiel der vorliegenden Erfindung. In dem Fahrzeug befindet sich ein Insasse 104 oder Fahrer 104, der im Folgenden als Betrachter 104 bezeichnet wird. Die Blickfeldanzeige 100 ist ausgebildet zum Darstellen von Bildinformationen in zwei unabhängigen Bildern für einen Betrachter. Die Blickfeldanzeige umfasst eine Einrichtung 106 zum Bereitstellen sowie eine Einrichtung 108 zum Umlenken. Die Einrichtung 106 ist ausgebildet, ein erstes Bild der zwei unabhängigen Bilder in einer ersten optischen Achse 110 und ein zweites Bild der zwei unabhängigen Bilder in einer zweiten optischen Achse 112 bereitzustellen. Die zwei optischen Achsen 110, 112 sind zumindest abschnittsweise verschieden. Die Einrichtung 108 zum Umlenken ist ausgebildet, eine Projektion des ersten Bildes und eine Projektion des zweiten Bildes in Richtung des Betrachters 104 umzulenken. Weiterhin ist die Einrichtung 108 zum Umlenken als eine zumindest teilweise transparente Projektionsfläche ausgebildet. So ist die Einrichtung 108 zum umlenken in der ersten optischen Achse 110 sowie in der zweiten optischen Achse 112 angeordnet. Mit anderen Worten kann die in Fig. 1 dargestellte Blickfeldanzeige 100 als eine Blickfeldanzeige mit zusätzlicher Projektionsanzeige für ein erweitertes Blickfeld bezeichnet werden.

In dem gezeigten Ausführungsbeispiel ist die Blickfeldanzeige 100 mit einem Kombigerät 114 und einem Navigationssystem 116 verbunden. Das Kombigerät 114 und das Navigationssystem 116 stellen der Blickfeldanzeige 100 Informationen bereit, die in dem ersten Bild und/oder dem zweiten Bild für den Betrachter 104 sichtbar gemacht werden.

Die Blickfeldanzeige 100 nutzt in dem gezeigten Ausführungsbeispiel einen Teilbereich einer Windschutzscheibe 118 des Fahrzeugs 102 für die Einrichtung 108 zum Umlenken beziehungsweise als Projektionsfläche.

Die Blickfeldanzeige 100 ist zu einem Teil in einem Armaturenbrett 120 des Fahrzeugs 102 angeordnet. Das Armaturenbrett 120 ist aus Sicht des Betrachters 104 hinter einem Lenkrad 122 des Fahrzeugs 102 angeordnet. Die Einrichtung 106 zum Bereitstellen befindet sich für den Betrachter 104 verdeckt in einem Bereich hinter dem Armaturenbrett 120. Bei dem Armaturenbrett 120 handelt es sich um eine Anzeige- oder Instrumententafel mit Messanzeigern und Bedienungshebeln. Der Inhalt oder Wert von Anzeigeelementen der Armaturentafel 120 können in einem der Bilder der Blickfeldanzeige 100 für den Betrachter 104 dargestellt werden.

Der nicht unbegrenzt verfügbare Bauraum im Armaturenbrett limitiert das Blickfeld einer Blickfeldanzeige, weswegen die Vielfalt darstellbarer Funktionen bei bekannten Systemen begrenzt ist.

Gegenüber einer konventionellen Anzeige über eine Instrumententafel bietet eine eine solche Blickfeldanzeige 100 den Vorteil, dass der Betrachter 104 den Blick nicht von einer realen Verkehrssituation abwenden muss, um die mittels der Blickfeldanzeige 100 übermittelten Informationen zu erfassen. Ein weiterer Vorteil ist, dass der Betrachter 104 zwischen Fahrszene und Blickfeldanzeigen-Bildinhalt nicht refokussieren muss. Die Brennweite der einzelnen Augen des Betrachters 104 bleibt beim Ablesen nahezu auf unendlich. Die Blickfeldanzeige 100 umfasst in einem Ausführungsbeispiel die Funktionalität einer kontaktanalogen Blickfeldanzeige. Dabei können Bilder in die aktuelle Sicht eines Fahrzeuginsassen derart eingeblendet werden, als seien sie fester Bestandteil der Umwelt. Beispielsweise kann ein Navigationspfeil derart erscheinen, als läge er direkt auf der Straße. Die Projektionsfläche ist in dem gezeigten Ausführungsbeispiel transparent beziehungsweise transluzent ausgeführt, sodass neben der auf der Projektionsfläche dargestellten Bildinformation die in einer Blickrichtung hinter der Projektionsfläche liegende Bildinformation für den Betrachter 104 sichtbar ist. Die Projektionsfläche kann Informationen der Umwelt mit der Bildinformation, das heißt künstlich erzeugten Informationen, überlagern bzw. kombinieren. Auf die Projektionsfläche können von der Einrichtung 106 zum Bereitstellen ausgehende Lichtstrahlen geleitet werden. Eine Ausbreitung der von der Einrichtung 106 zum Bereitstellen ausgehenden Lichtstrahlen kann durch eine optische Achse 110, 112 definiert sein. Das erste Bild und das zweite Bild sind von der Einrichtung 106 zum Bereitstellen ausgehend über die Projektionsfläche in Richtung des Gesichtsfelds des Betrachters 104 darstellbar. Das Gesichtsfeld des Fahrzeuginsassen kann auch als Eyebox bezeichnet werden.

Fig. 2 zeigt eine schematische Darstellung einer Windschutzscheiben-Blickfeldanzeige 100. die Windschutzscheiben-Blickfeldanzeige 100 umfasst eine Einrichtung 106 zum Bereitstellen sowie eine Einrichtung 108 zum Umlenken. Die Einrichtung 106 zum Bereitstellen ist im Armaturenbrett 120 angeordnet. Die Einrichtung 106 zum Bereitstellen umfasst einen Bildgeber 224 sowie einen Spiegel 226. Der Spiegel 226 repräsentiert ein Optikmodul der Einrichtung 108 zum Bereitstellen bzw. steht stellvertretend für eine Mehrzahl von Komponenten eines Optikmoduls der Einrichtung 108 zum Bereitstellen. Eine Windschutzscheibe 118 wird als Projektionsfläche der Einrichtung 108 zum Umlenken genutzt. Von einem Auge eines Betrachters 104 aus ist als Referenz eine horizontale Linie 228 in die Figur Fig. 2 eingezeichnet. Das von dem Bildgeber 224 ausgegebene Bild wird von dem Spiegel 226 in Richtung der Einrichtung 108 zum Umlenken und von dort in Richtung des Betrachters 104 geleitet. Hierbei ist die erste optische Achse 110 in Fig. 2 wiedergegeben. Für den Betrachter 104 stellt sich das von dem Bildgeber 224 bereitgestellte Bild als virtuelles Bild 230 vor der Windschutzscheibe 118 dar.

Die in Fig. 2 dargestellte Blickfeldanzeige 100, auch als Head-up-Display 100 oder HUD 100 bezeichnet, zeigt eine Bildgeberfläche 224, die über einen Hohlspiegel 226 und die Windschutzscheibe 118 in ein virtuelles Bild 230 abgebildet wird, welches für den Fahrer 104 über der Motorhaube schwebend erscheint. Der für die Abbildungsoptik notwendige Bauraum benötigt ein beträchtliches Volumen im Armaturenbrett 120. Typisch ist ein Volumen im Bereich von zwei Litern für den benötigten Bauraum der Blickfeldanzeige 100. Das Blickfeld, welches zur Informationsdarstellung genutzt werden kann, beträgt typischerweise ca. 6°x2°. Ist das HUD als AR-HUD oder kontaktanaloge Blickfeldanzeige ausgeführt, bei der Bildinhalte mit der Fahrszene zu verschmelzen scheinen, kann die Bilddistanz die typischen 2m deutlich übersteigen, und bis mehr als15m betragen. Das Blickfeld einer kontaktanalogen Blickfeldanzeige (AR-HUD) liegt typisch bei mindestens 8°x4° (horizontal x vertikal).

Fig. 3 zeigt eine schematische Darstellung einer Kombinierer-Blickfeldanzeige 100. Dabei weist die Darstellung in Fig. 3 eine Ähnlichkeit zur Darstellung in Fig. 2 auf. Im Unterschied zu Fig. 2 ist in einer Scheibenwurzel der Windschutzscheibe 118 ein Kombinierer 332 als Einrichtung 108 zum Umlenken angeordnet. Die Einrichtung 106 zum Bereitstellen weist als Bildgeber 224 einen LCD-Bildschirm auf, welcher durch einen Bildprojektor samt entsprechender Streuscheibe ersetzt werden kann. Ein von dem Bildgeber 224 bereitgestelltes Bild wird über den Kombinierer 332 in Richtung der Augen des Betrachters 104 projiziert. Für den Betrachter 104 erscheint das projizierte Bild als ein virtuelles Bild vor der Windschutzscheibe 118 des Fahrzeugs. Der Kombinierer 332 ist als ein transparentes optisches Bauelement ausgeführt. Der Strahlengang der Blickfeldanzeige 100 wird durch die zweite optische Achse 112 in Fig. 3 dargestellt.

Ein Combiner-HUD 100 oder eine Kombinierer-Blickfeldanzeige 100 ist in Fig. 3 dargestellt. Hierbei entsteht, wie bei dem in Fig. 2 beschriebenen Windschutzscheiben-HUD 100, ein virtuelles Bild 230 in einer Distanz von typischerweise 2m vor dem Fahrerauge. Im Unterschied zum Windschutzscheiben-HUD 100 wird auf eine separate Glas- oder Kunststoffscheibe 332 zurückgegriffen, um das Bild in das Sichtfeld des Fahrers 104 einzublenden und nicht auf die Windschutzscheibe 118. Vorteile von Combiner-HUDs 100 sind die Unabhängigkeit von der Windschutzscheibe 118 und damit die Übertragbarkeit auf verschiedene Fahrzeug-Modelle, sowie die Möglichkeit die Combiner-Oberfläche frei zu formen, wodurch der Combiner 332 selbst die optische Vergrößerungsfunktion der Blickfeldanzeige 100 (HUD) realisieren kann oder zumindest an diese angepasst werden kann. Bei einem Windschutzscheiben-HUD 100 ist dies nicht möglich, da die Windschutzscheibenkrümmung zu sehr hohem Maße durch das Design und die Aerodynamik des Fahrzeugs vorgegeben ist.

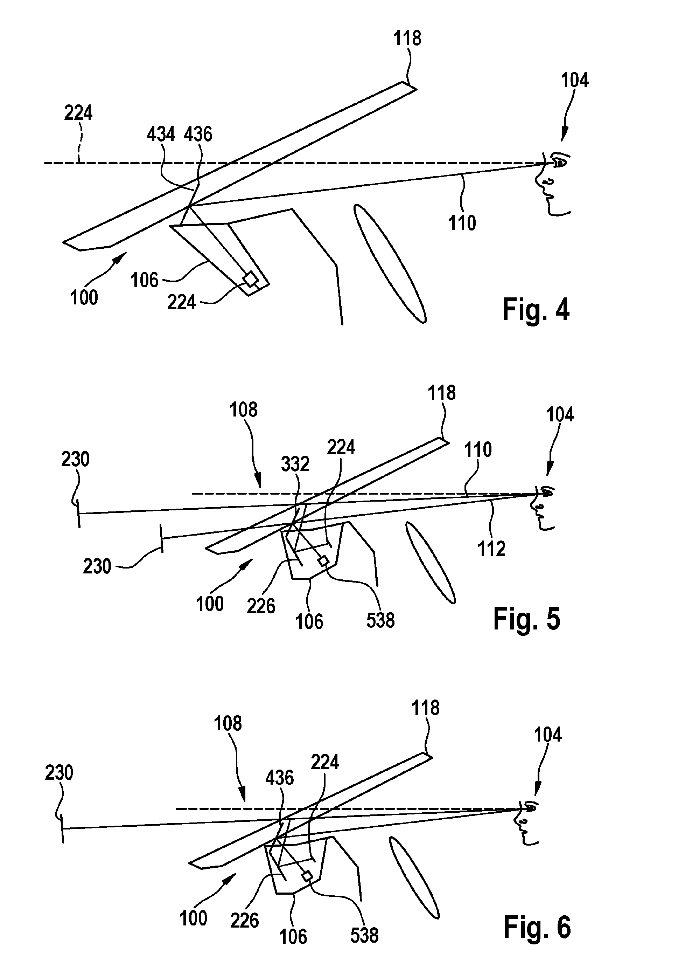

Fig. 4 zeigt eine schematische Darstellung einer transparenten Holografisches-Element-Projektionsanzeige als eine Scheibenwurzelanzeige. Die in Fig. 4 dargestellte Blickfeldanzeige 100 weist eine Ähnlichkeit zu den in Fig. 2 und Fig. 3 gezeigten Blickfeldanzeigen 100 auf. Im Unterschied zu der in Fig. 3 dargestellten Blickfeldanzeige 100 wird als Einrichtung zum Umlenken 108 eine holografische Streuscheibe 434 als holografisch-optisches Element 436 verwendet. Die Einrichtung 106 zum Bereitstellen weist einen Bildprojektor 224 auf. Das von dem Bildprojektor 224 bereitgestellte Bild wird über die holografische Streuscheibe 434 in Richtung des Auges des Betrachters 104 projiziert.

In Fig. 4 ist eine holografische Projektionsanzeige 100 dargestellt, bei der ein reelles Bild auf einer transparenten Streuscheibe 434 durch einen Beamer 224 erzeugt wird. Der hierfür erforderliche Bauraum ist aufgrund der nicht notwendigen Abbildungsoptik im Vergleich zu einer klassischen Blickfeldanzeige deutlich kleiner, das heißt insbesondere kleiner als 2 Liter (bei einem für ein HUD typischem Blickfeld von 6°x2°). Weiterhin lassen sich durch die reduzierten Bauraumanforderungen deutlich größere Blickfelder abdecken (horizontal >15°, vertikal >4°). Der Nachteil im Vergleich zu einer klassischen Blickfeldanzeige ist die geringere Bilddistanz zum Fahrerauge, wodurch im Vergleich zur klassischen Blickfeldanzeige größere Akkommodationsanstrengungen beim Ablesen erforderlich sind.

Fig. 5 zeigt eine schematische Darstellung einer Blickfeldanzeige 100 als eine Kombination einer Windschutzscheiben-Blickfeldanzeige und einer Kombinierer-Blickfeldanzeige gemäß einem Ausführungsbeispiel der vorliegenden Erfindung. Bei der Blickfeldanzeige 100 kann es sich um eine Kombination einer Variante einer in Fig. 2 und einer in Fig. 3 dargestellten Blickfeldanzeige 100 handeln. Die Blickfeldanzeige 100 umfasst eine Einrichtung 106 zum Bereitstellen und eine Einrichtung 108 zum Umlenken. Dabei weist in dem gezeigten Ausführungsbeispiel die Einrichtung 106 zum Bereitstellen einen ersten Bildgeber 224, einen zweiten Bildgeber 538 und einen Spiegel 226 auf. Der Spiegel 226 steht dabei stellvertretend für ein Optikmodul. Der Strahlengang der von den Bildgebern ausgehenden Lichtstrahlen wird durch die optischen Achsen 110, 112 in der Figur repräsentiert. Die Einrichtung 108 zum Umlenken umfasst einen Teilbereich der Windschutzscheibe 118 als Projektionsfläche sowie in der Scheibenwurzel der Windschutzscheibe 118 einen Kombinierer 332.

Das von dem ersten Bildgeber 224 bereitgestellte Bild wird entlang der ersten optischen Achse 110 über den Spiegel 226 und einen Teilbereich der Windschutzscheibe 118 als Projektionsfläche dem Betrachter 104 als virtuelles Bild 230 vor der Windschutzscheibe dargestellt. Das von dem zweiten Bildgeber 538 bereitgestellte Bild wird über den Kombinierer 332 entlang der zweiten optischen Achse 112 dem Betrachter 104 als virtuelles Bild 230 dargestellt. Fig. 5 zeigt eine Variante einer Blickfeldanzeige 100, bei der die Einrichtung 108 zum Umlenken einen Kombinierer 332 und einen Teilbereich der Windschutzscheibe 118 des Fahrzeugs als eine Projektionsfläche umfasst. In alternativen hier nicht dargestellten Varianten umfasst die Einrichtung 108 zum Umlenken zwei Kombinierer 332 oder alternativ zumindest einen Teilbereich der Windschutzscheibe 118.

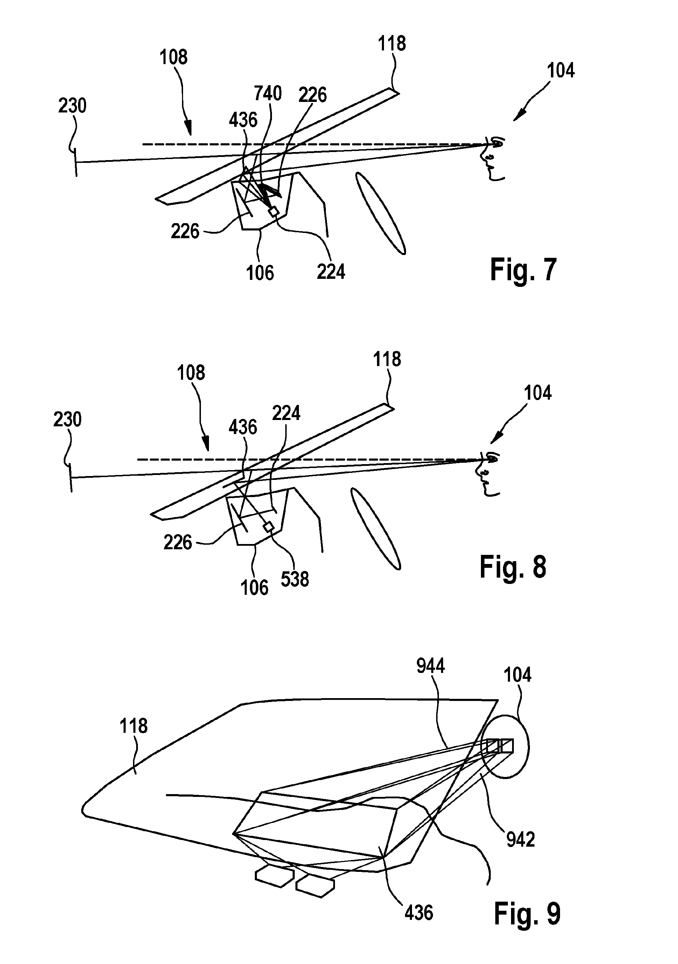

Die Einrichtung 106 zum Bereitstellen der in Fig. 5 dargestellten Blickfeldanzeige 100 weist einen ersten Bildgeber 224 und einen zweiten Bildgeber 538 sowie einen Spiegel 226 auf. In alternativen, hier nicht dargestellten Ausführungsbeispielen, umfasst die Einrichtung 106 zum Bereitstellen einen Bildgeber 224 sowie einen Spiegel 226. ein entsprechendes Ausführungsbeispiel wird in Fig. 7 näher erläutert.

Die Einrichtung 108 zum Umlenken der Projektion kann in einem Ausführungsbeispiel ausgebildet sein, das erste Bild und/oder das zweite Bild als eine kontaktanaloge Anzeige für den Betrachter 104 darzustellen.

Mit anderen Worten handelt es sich bei einer Variante der in Fig. 5 gezeigten Blickfeldanzeige 100 um eine kontaktanaloge Blickfeldanzeige (AR-HUD) mit einer zusätzlichen Kombinierer-Blickfeldanzeige (Combiner-HUD). In Fig. 5 ist die Kombination aus kontaktanaloger Blickfeldanzeige AR-HUD und Kombinierer-Blickfeldanzeige oder Combiner-HUD dargestellt, wobei die virtuelle Bilddistanz der kontaktanalogen Blickfeldanzeige die zeichnerisch dargestellte Bilddistanz wie oben erwähnt deutlich übersteigen kann. Hierbei ist der Vorteil, dass fahrzeugspezifische Informationen wie Geschwindigkeit, Blinkeranzeige, usw. über die Kombinierer-Blickfeldanzeige dargestellt werden können und fahrszenenbezogene Informationen wie beispielsweise ACC-Leiste, Markierung von einem Fußgänger oder vorausschauendem Fahrzeug, Informationen des Navigationssystems, über die kontaktanaloge Blickfeldanzeige oder AR-HUD-Optik. Würde man beide Blickfelder in eine Blickfeld-Optik vereinen, würde ein deutlich größeres Bauvolumen erforderlich sein, sowie größere und damit teurere Optiken. Weiterhin sei erwähnt, dass die entsprechenden Bildgeber 224, 538 entweder als hinterleuchtete Flüssigkristallanzeigen ausgeführt sind oder als Projektionsbildgeber basierend auf einem Bildprojektor und einer Streufläche, beziehungsweise einer Kombination aus beiden Varianten.

Fig. 6 zeigt eine schematische Darstellung einer Blickfeldanzeige 100 als eine Kombination einer Blickfeldanzeige mit einer separaten, transparenten Holografisches-Element-Projektionsanzeige gemäß einem Ausführungsbeispiel der vorliegenden Erfindung. Bei der Blickfeldanzeige 100 kann es sich um eine Kombination einer Variante einer in Fig. 2 und einer in Fig. 4 dargestellten Blickfeldanzeige 100 handeln. Die Einrichtung 106 zum Bereitstellen umfasst einen ersten Bildgeber 224, einen zweiten Bildgeber 538 sowie einen Spiegel 226. Wie bereits ausgeführt steht der Spiegel 226 in der schematischen Darstellung als Repräsentant eines Optikmoduls. Die Einrichtung 108 zum Umlenken um fast einen Teilbereich der Windschutzscheibe 118 sowie ein holografisch-optisches Element 436. In einer Variante des gezeigten Ausführungsbeispiels ist das holografisch-optische Element 436 als eine holografische Streuscheibe 434 ausgebildet.

Mit anderen Worten ist in Fig. 6 eine Blickfeldanzeige 100 mit integrierter oder zusätzlicher holografisch-optischer Projektionsanzeige dargestellt. Bei der gezeigten Kombination ist die holografische Projektionsanzeige im Bereich der Scheibenwurzel angeordnet. Der Bauraum wird dabei im Vergleich zu einer Blickfeldanzeige oder kontaktanalogen Blickfeldanzeige wie bei der Variante aus Fig. 5 nicht vergrößert. Dennoch erweitert sich das Blickfeld, welches zur Informationsdarstellung verwendet werden kann, beträchtlich, wobei darauf geachtet werden muss, dass sich die Bildfelder nicht störend überlagern. Weiterhin ist es möglich mit einem solchen System Information in verschiedenen Distanzen vom Fahrerauge darzustellen, wodurch ein räumlicher Tiefeneindruck generiert werden kann. Letzteres gilt auch für den Ansatz aus Fig. 5.

Vorteilhaft kann im Vergleich zu einer einfachen, bekannten Blickfeldanzeige 100 das Blickfeld durch Hinzufügen einer holografisch-optischen Projektionsanzeige (HOE: holografisch-optisches Element), welche von einem Projektor 224, 538 mit Bildinformationen versorgt wird, erweitert werden. Die auf der holografisch-optischen Projektionsanzeige dargestellten Bildinhalte erscheinen auf der holografisch-optischen Oberfläche als reelles Bild und nicht als virtuelles Bild in größerer Entfernung (>1,8m) wie bei einer klassischen Blickfeldanzeige. Somit wird das Blickfeld (typisch 5°x 1,5° bis 10° x 4°) um ein Vielfaches vergrößert (Blickfeld einer holografisch-optischen Projektionsanzeige >= 18° x 4°). Dabei verändert sich der Bauraum der Blickfeldanzeige 100 nicht. Es wird eine erhöhte Fahrsicherheit und ein erhöhter Fahrkomfort erzielt, da alle im Kombiinstrument sowie Zentral-Display dargestellten Informationen auf der holografisch-optischen Projektionsanzeige in geringerem Winkel zum Fahrgeschehen dargestellt werden können und diese im Vergleich zum Kombünstrument auch in etwas größerer Entfernung zum Fahrerauge liegen, wodurch die Akkommodationsanstrengungen durch den Betrachter 104 beim Ablesen reduziert werden können. Vorteilhaft werden neuartige Möglichkeiten der Darstellung von Bildinhalten genutzt: Es können Informationen in verschiedenen Ebenen dargestellt werden, dies kann zusammen mit perspektivischer Darstellung genutzt werden, um tiefenwirksame Darstellung zu erreichen. Beispielsweise können fahrzeugzugehörige Informationen auf der holografisch-optischen Projektionsanzeige dargestellt werden und umgebungsabhängige Informationen mit einer klassischen Blickfeldanzeige angezeigt werden. Dabei sind beide Funktionalitäten in einer Vorrichtung vereint.

Fig. 7 zeigt eine schematische Darstellung einer Blickfeldanzeige 100 als eine Kombination von einer von einem einzigen Projektor angesteuerten Blickfeldanzeige mit einer separaten, transparenten Holografisches-Element-Projektionsanzeige gemäß einem Ausführungsbeispiel der vorliegenden Erfindung. Die Einrichtung 108 zum Umlenken umfasst einen Teilbereich der Windschutzscheibe 118 sowie ein holografisch-optisches Element 436. Die Einrichtung 106 zum Bereitstellen umfasst einen Bildgeber 224 sowie ein Optikmodul, welches zumindest zwei Spiegel 226 sowie einen weiteren Spiegel 740 umfasst. Der Bildgeber 224 stellt zwei Bilder bereit. In einem ersten Ausführungsbeispiel ragt der Spiegel 740 zur Hälfte in den Strahlengang des Bildgebers 224 in ein und leitet eine Bildhälfte oder ein Teilbild über die zwei Spiegel 226 und den als Projektionsfläche ausgebildeten Teilbereich der Windschutzscheibe 118 in Richtung des Betrachters 104. Das Bild erscheint für den Betrachter 104 als virtuelles Bild 230 vor der Windschutzscheibe. Die andere Bildhälfte bzw. ein weiteres Teilbild wird durch den Spiegel 740 nicht abgelenkt, sondern gelangt direkt auf eine holografisch-optische Projektionsfläche 436 und erscheint für den Betrachter 104 als ein reelles Bild.

In einem alternativen Ausführungsbeispiel ist der Spiegel 740 als ein aktives optisches Element 740 ausgebildet. Beispielsweise ist das aktive optische Element 740 als ein schaltbarer Spiegel ausgebildet, der abwechselnd auf treffende Lichtstrahlen reflektiert, ablenkt bzw. spiegelt und in einem transparentgeschalteten Zustand auftreffende Lichtstrahlen hindurch lässt. Das aktive optische Element 740 ist in diesem Ausführungsbeispiel komplett im Strahlengang des Bildgebers 224 angeordnet und leitet in einem reflektierenden Zustand das auftreffende Licht bzw. ein erstes Bild über die optischen Elemente bzw. spiegelt 226 auf den als Projektionsfläche ausgebildeten Teilbereich der Windschutzscheibe 118 und in einem durchlässigen Zustand wird das auf treffende Licht bzw. das zweite Bild an das holografisch-optische Element 436 geleitet. In einer Variante können selbstverständlich der reflektierende Zustand und der durchlässige Zustand vertauscht werden oder anstelle des holografisch-optischen Elements 436 auch ein Kombinierer 436 oder mit einem anderen hier in den Figuren beschriebenem Ausführungsbeispiel kombiniert werden.

Mit anderen Worten können sich zwei Systeme (beispielsweise eine klassische Blickfeldanzeige und eine holografisch-optische Projektionsanzeige) einen Bildgeber 224 teilen, das heißt, der Bildinhalt beider Systeme wird von einem Projektor 224 erzeugt. Hierbei kann jedes System beispielsweise eine andere Bildgeberfläche nutzen. Der Strahlengang des Bildprojektors wird hierbei mittels eines Spiegels 740 in die zwei Pfade (HUD- und HOE-Anzeige) aufgeteilt.

Alternativ zu einem in Fig. 7 dargestellten Ausführungsbeispiel mit einem zum Teil in den Strahlengang des Projektors 224 hereinragenden Spiegels könnte auch ein aktives optisches Element 740 (beispielsweise schaltbarer Spiegel) zeitlich sequenziell zwischen durchlässigem und reflektierendem Zustand mit einer Frequenz von >120Hz hin- und herschalten.

Fig. 8 zeigt eine schematische Darstellung einer Blickfeldanzeige 100 als eine Kombination von einer Blickfeldanzeige und einer in die Windschutzscheibe integrierten transparenten Holografisches-Element-Projektionsanzeige gemäß einem Ausführungsbeispiel der vorliegenden Erfindung. Bei der Blickfeldanzeige 100 kann es sich um ein Ausführungsbeispiel der in Fig. 1 oder Fig. 5 bis Fig. 7 gezeigten Blickfeldanzeige 100 handeln. Dabei ist in der Scheibenwurzel der Windschutzscheibe 101 holografisch-optisches Element 436 angeordnet. Somit umfasst die Einrichtung 108 zum Umlenken einen Teilbereich der Windschutzscheibe 118 sowie das holografisch-optische Element 436. Die Einrichtung 106 zum Bereitstellen umfasst einen ersten Bildgeber 224, einen Spiegel 226 sowie einen zweiten Bildgeber 538. Das von dem ersten Bildgeber 224 bereitgestellte erste Bild wird über den Spiegel 226 auf den als Projektionsfläche ausgebildeten Teilbereich der Windschutzscheibe 118 geleitet und als virtuelles Bild 230 für den Betrachter 104 vor der Windschutzscheibe 118 dargestellt. Das von dem zweiten Bildgeber 538 bereitgestellte zweite Bild wird über das holografisch-optische Element 436 in Richtung des Betrachters 104 umgelenkt und stellt sich für den Betrachter 104 als reelles Bild dar.

In einer Variante der in Fig. 8 gezeigten Blickfeldanzeige 100 ist die Einrichtung 106 zum Bereitstellen ausgebildet, das erste Bild in einem ersten Wellenlängenbereich und das zweite Bild in einem zweiten Wellenlängenbereich bereitzustellen. Dabei unterscheiden sich der erste Wellenlängenbereich und der zweite Wellenlängenbereich voneinander. Beispielsweise erstrecken sich der erste Wellenlängenbereich von 380 nm bis 580 nm und der zweite Wellenlängenbereich von 580 nm bis 720 nm.

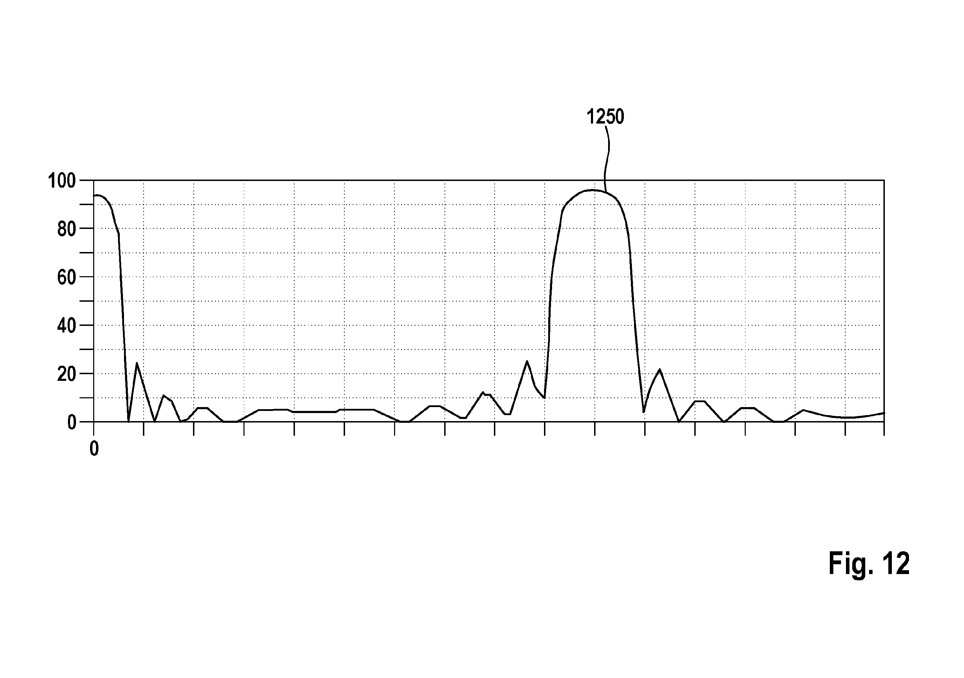

In Fig. 8 ist die Kombination aus Windschutzscheiben-Blickfeldanzeige (HUD oder AR-HUD) und in die Windschutzscheibe 118 eingebetteter (oder aufgeklebter) holografischer Projektionsanzeige im Bereich der Scheibenwurzel dargestellt. Hierbei ist es im Gegensatz zu in den vorangegangenen Figuren beschriebenen Anzeigen auch möglich, dass sich die von der Blickfeldanzeige und der holografisch-optischen Anzeige genutzten Bereiche überlagern, ohne dass Bildstörungen entstehen. Hierzu wird in der Beschreibung zu Fig. 12 das Thema der Winkelselektivität weiter ausgeführt. Somit kann die holografische Scheibenwurzelanzeige großflächig ausgelegt werden und eine Vielfalt von Funktionen darstellen, nebst den kontaktanalogen im AR-HUD dargestellten Bildinhalten.

Verschiedene Ausführungen sind möglich. In einem Ausführungsbeispiel werden die Bildinhalte beider Systeme über die Windschutzscheibe 118 (beziehungsweise eine in die Windschutzscheibe integrierte Blickfeldanzeige) eingespiegelt, aber nutzen unterschiedliche Bereiche auf der Windschutzscheibe. Alternativ nutzen beide Systeme den gleichen Bereich auf der Windschutzscheibe 118. Dabei nutzt die Blickfeldanzeige die Reflexion an der Windschutzscheibe 118, während das Bild der holografisch-optischen Projektionsanzeige durch die holografische Schicht entsteht. Damit es hier nicht zu einer gegenseitigen Störung der Systeme kommt, wird der Rekonstruktionswinkel der holografisch-optischen Anzeige so gewählt, dass er sich vom Reflexionswinkel der Blickfeldanzeige unterscheidet. Wenn beide Systeme sich einen Projektor 224 teilen, könnte die Trennung der Systeme mittels Wellenlänge (beispielsweise nutzt die Blickfeldanzeige eine rote Darstellung und das holografisch-optische System nutzt Wellenlängen des Lichts im Bereich von grün und/oder blau).

Fig. 9 zeigt eine schematische Darstellung einer autostereoskopischen holografischen Projektionsanzeige. Eine autostereoskopische Blickfeldanzeige kann mittels einer für herkömmliche Blickfeldanzeigen üblichen virtuellen Bilddistanz von typisch >=2m durch Variation der Disparität zwischen den für rechtes und linkes Auge dargestellten Bildinhalten verschiedene Bilddistanzen emulieren. Hierfür ist erforderlich, dass linkes und rechtes Auge des Betrachters 104 verschiedene Bildinhalte dargeboten bekommen (Blickfeldanzeigen-Eyebox links 942, Blickfeldanzeigen-Eyebox rechts 944), was beispielsweise über autostereoskopische Monitore entnommen werden kann, hier aber nicht weiter ausgeführt wird. Kombiniert mit einer holografischen Scheibenwurzelanzeige 436 in analoger Weise wie die Kombination aus Blickfeldanzeige und holografisch-optischer Projektionsanzeige (s. o.) lassen sich durch eine solche Lösung Bildinhalte in unterschiedlichen Tiefenebenen darstellen und mit zusätzlichen auf der holografisch-optischen Projektionsanzeige dargestellten Bildinhalten kombinieren. Letztere befinden sich relativ nah am Fahrerauge (typisch <1m) und lassen sich daher ohne eine für den Fahrer unangenehme Inkonsistenz zwischen den Tiefenhinweisen Akkommodation und Konvergenz mittels der autostereoskopischen Anzeige nicht anzeigen. Somit wird durch das Hinzufügen der holografischen Projektionsanzeige 436 zur autostereoskopischen Blickfeldanzeige der Tiefenbereich, der für die Darstellung von Bildinhalten verwendbar ist, vergrößert.

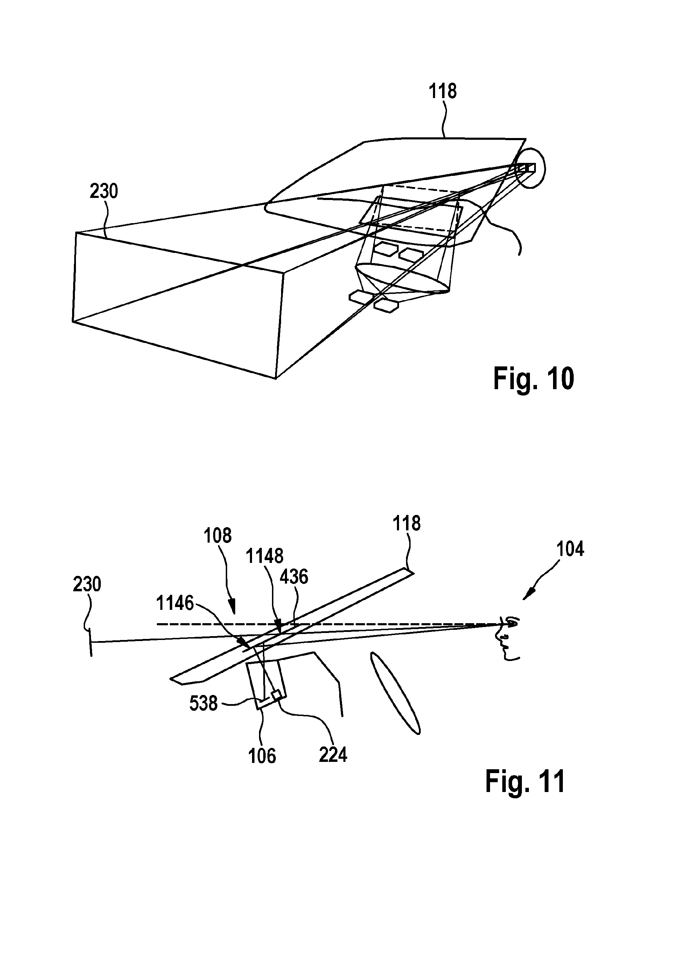

Fig. 10 zeigt eine schematische Darstellung einer Blickfeldanzeige 100 als eine Kombination einer autostereoskopischen holografischen Projektionsanzeige und einer autostereoskopischen Blickfeldanzeige gemäß einem Ausführungsbeispiel der vorliegenden Erfindung. So zeigt Fig. 10 eine Stereo-Blickfeldanzeige mit in die Windschutzscheibe 118 integrierter zusätzlicher (stereoskopischer) holografisch-optischer Projektionsanzeige. So ist die Einrichtung 106 zum Bereitstellen ausgebildet, zumindest ein autostereoskopisches Bild zu erzeugen. Die Einrichtung 108 zum Umlenken ist autostereoskopisch ausgelegt. In einer weiteren Variante ist denkbar, dass auch die holografisch-optische Projektionsanzeige autostereoskopisch ausgelegt werden kann. Dies würde den für Bildinhalte nutzbaren Tiefenbereich im Vergleich zum letztgenannten Ansatz noch erweitern, da nun auch im Bereich vor und hinter der holografischen Projektionsanzeige Bildinhalte dargestellt werden können. Schließlich sei erwähnt, dass die in diesem Abschnitt erwähnten Projektionsanzeigen auch mittels in die Windschutzscheibe 118 eingebetteter oder aufgeklebter holografisch-optischer Streuscheiben realisiert werden können.

Fig. 11 zeigt eine schematische Darstellung einer Blickfeldanzeige 100 mit einem in die Windschutzscheibe eingebetteten holografisch-optischen Element gemäß einem Ausführungsbeispiel der vorliegenden Erfindung. Eine Einrichtung 106 zum Bereitstellen umfasst zwei Bildgeber 224, 538. Eine Einrichtung 108 zum Umlenken weist ein holografisch-optisches Element 436 auf. Die von den Bildgebern 224, 538 bereitgestellten Bilder werden über das holografisch-optische Element 436 in Richtung des Auges des Betrachters 104 gelenkt. Dabei stellt sich das von dem ersten Bildgeber 224 ausgehende Bild für den Betrachter 104 als reelles Bild dar. Das von dem zweiten Bildgeber 538 bereitgestellte zweite Bild stellt sich für den Betrachter 104 als ein virtuelles Bild 230 dar. Das holografisch-optische Element 436 weist eine Streuscheibenfunktion 1146 sowie eine Hohlspiegelfunktion 1148 auf. Die Streuscheibenfunktion 1146 sowie die Hohlspiegelfunktion 1148 wirken selektiv je nach Winkel der auftretenden Lichtstrahlen. Dies kann als abhängig von einem Einfallswinkel oder Rekonstruktionswinkel bezeichnet werden. Das holografisch-optische Element weist unterschiedliche optische Eigenschaften je nach Einfallswinkel zwischen den Lichtstrahlen oder der optischen Achse der auftreffenden Lichtstrahlen auf.

Die Einrichtung 108 zum Umlenken umfasst ein holografisch-optisches Element 436, wobei das holografisch-optische Element 436 eine Hohlspiegelfunktion 1148 für einen ersten Rekonstruktionswinkel und eine Streuscheibenfunktion 1146 für einen von dem ersten Rekonstruktionswinkel verschiedenen zweiten Rekonstruktionswinkel aufweist.

Mit anderen Worten erfolgt eine Integration von zwei Funktionen, d.h. Streuscheibe und Hohlspiegel, in das holografisch-optische Element 436) in das HOE in der Windschutzscheibe 118. In Fig. 11 ist ein Ausführungsbeispiel dargestellt, bei dem ein in die Windschutzscheibe 118 eingebettetes holografisch-optisches Element 436 zwei optische Funktionen erfüllt. Zum einen erzeugt es die Streufunktion für die transparente holografisch-optische Projektionsanzeige. Zum anderen ist es aber auch das letzte optische Element des Blickfeldanzeigen-Systems und realisiert beispielsweise eine HohlspiegelFunktion. Dabei bezieht sich das letzte bei "letzte optische Element" auf eine Anordnung ausgehend vom Bildgeber als Lichtquelle und des Auges des Betrachters 104 als Detektor.

Die zwei optischen Funktionen können beide in ein einziges holografisch-optisches Element 436 aufgenommen werden oder durch zwei separate holografisch-optische Elemente 436 erzeugt werden, die aufeinander laminiert sind. Weiterhin können die zwei optischen Funktionen in unterschiedlichen Bereichen des holografisch-optischen Elements 436 liegen oder im selben Bereich des holografisch-optischen Elements 436 überlagert sein. Im letzteren Fall sind die zwei Funktionen dann durch unterschiedliche Rekonstruktionswinkel (=Einfallswinkel) zu separieren. Der Unterschied der Einfallswinkel sollte so groß sein, dass sich die Funktionen gegenseitig nicht stören. In Fig. 12 ist beispielhaft das Ergebnis einer Simulation für ein einfaches holografisches Umlenkelement dargestellt. Man erkennt deutlich den steilen Abfall der Beugungseffizienz, wenn der Einfallswinkel vom Sollwinkel (hier im Beispiel 56°) abweicht. Bei +/-10° liegt die Beugungseffizienz bereits unter 1%. Durch geeignete Wahl der Rekonstruktionswinkel unter Berücksichtigung der Winkelselektivität des holografisch-optischen Elements 436 lassen sich daher verschiedene optische Funktionen in einem realisieren, die sich nicht stören. Außerdem kann man wie oben schon erwähnt die Unabhängigkeit der beiden optischen Funktionen auch durch Ausnutzung der Wellenlängenselektivität erreichen.

Fig. 12 zeigt einen Kurvenverlauf einer Simulation einer Beugungseffizienz eines holografisch-optischen Elements gemäß einem Ausführungsbeispiel der vorliegenden Erfindung. Bei dem holografisch-optischen Element kann es sich um ein in den vorangegangenen Figuren mit dem Bezugszeichen 436 versehenes holografisch-optisches Element 436 handeln. In einem kartesischen Koordinatensystem ist auf der Abszisse der sphärische Winkel Theta und auf der Ordinate eine Effektivität der Reflexion in Prozent dargestellt. Der Kurvenverlauf 1250 weist je ein Maximum bei 0° und bei 56,7° auf. Dabei erstreckt sich ein Bereich hoher Reflexion in einem Bereich von 0° bis ca. 4° sowie ein weiterer Bereich hoher Reflexion in einem Bereich von 52° bis 60°. Bei allen anderen Winkeln beträgt die Reflexion unter 20 %.

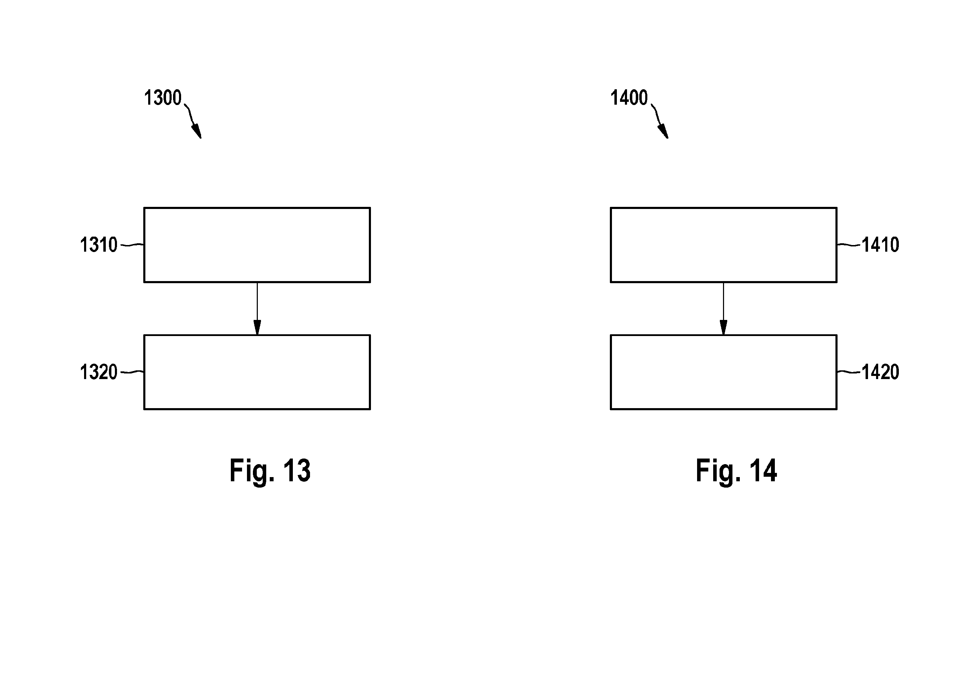

Fig. 13 zeigt ein Ablaufdiagramm eines Verfahrens 1300 zum Darstellen von Bildinformationen in zwei unabhängigen Bildern für ein Fahrzeug gemäß einem Ausführungsbeispiel der vorliegenden Erfindung. Das Verfahren 1300 zum Darstellen von Bildinformationen in zwei unabhängigen Bildern für ein Fahrzeug umfasst einen Schritt 1310 des Bereitstellens von einem ersten Bild der zwei unabhängigen Bilder in einer ersten optischen Achse und von einem zweiten Bild der zwei unabhängigen Bilder in einer von der ersten optischen Achse zumindest abschnittsweise verschiedenen zweiten optischen Achse sowie einen Schritt 1320 des Umlenkens einer Projektion des ersten Bildes und/oder einer Projektion des zweiten Bildes, wobei die Einrichtung zum Umlenken als zumindest eine teilweise transparente Projektionsfläche ausgebildet ist, die in der optischen Achse des ersten Bildes und/oder in der optischen Achse des zweiten Bildes angeordnet ist, wobei die Projektion des ersten Bildes entlang der ersten optischen Achse in Richtung des Betrachters gelenkt wird und wobei die Projektion des zweiten Bildes entlang der zweiten optischen Achse in Richtung des Betrachters gelenkt wird.

Fig. 14 zeigt ein Ablaufdiagramm eines Verfahrens 1400 zum Herstellen einer Blickfeldanzeige für ein Fahrzeug zum Darstellen von Bildinformationen in zwei unabhängigen Bildern für einen Betrachter gemäß einem Ausführungsbeispiel der vorliegenden Erfindung. Bei der Blickfeldanzeige kann es sich um ein Ausführungsbeispiel einer in den vorangegangenen Figuren beschriebenen Blickfeldanzeige 100 handeln. Das Verfahren 1400 zum Herstellen einer Blickfeldanzeige für ein Fahrzeug zum Darstellen von Bildinformationen in zwei unabhängigen Bildern für einen Betrachter umfasst einen Schritt 1410 des Bereitstellens einer Einrichtung zum Bereitstellen von einem ersten Bild der zwei unabhängigen Bilder in einer ersten optischen Achse und von einem zweiten Bild der zwei unabhängigen Bilder in einer von der ersten optischen Achse zumindest abschnittsweise verschiedenen zweiten optischen Achse sowie einer Einrichtung zum Umlenken einer Projektion des ersten Bildes und/oder einer Projektion des zweiten Bildes, wobei die Einrichtung zum Umlenken als zumindest eine teilweise transparente Projektionsfläche ausgebildet ist sowie einen Schritt 1420 des Anordnens der Einrichtung zum Bereitstellen und der Einrichtung zum Umlenken, derart, dass die Einrichtung zum Umlenken in der optischen Achse des ersten Bildes und/oder in der optischen Achse des zweiten Bildes angeordnet ist, wobei die Projektion des ersten Bildes entlang der ersten optischen Achse in Richtung des Betrachters gelenkt wird und wobei die Projektion des zweiten Bildes entlang der zweiten optischen Achse in Richtung des Betrachters gelenkt wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Blickfeldanzeige (100) für ein Fahrzeug (102) zum Darstellen von Bildinformationen in zwei unabhängigen Bildern für einen Betrachter (104), wobei die Blickfeldanzeige (100) die folgenden Merkmale aufweist:
eine Einrichtung (106) zum Bereitstellen von einem ersten Bild der zwei unabhängigen Bilder in einer ersten optischen Achse (110) und von einem zweiten Bild der zwei unabhängigen Bilder in einer von der ersten optischen Achse (110) zumindest abschnittsweise verschiedenen zweiten optischen Achse (112); und
eine Einrichtung (108) zum Umlenken einer Projektion des ersten Bildes und/oder einer Projektion des zweiten Bildes, wobei die Einrichtung (108) zum Umlenken als zumindest eine teilweise transparente Projektionsfläche ausgebildet ist, die in der ersten optischen Achse (110) des ersten Bildes und/oder in der zweiten optischen Achse (112) des zweiten Bildes angeordnet ist, wobei die Einrichtung (108) zum Umlenken ausgebildet ist, um die Projektion des ersten Bildes entlang der ersten optischen Achse (110) in Richtung des Betrachters auszulenken und wobei die Einrichtung (108) zum Umlenken ausgebildet ist, um die Projektion des zweiten Bildes entlang der zweiten optischen Achse (112) in Richtung des Betrachters (104) auszulenken.

2. Blickfeldanzeige (100) gemäß Anspruch 1, bei der die Einrichtung (108) zum Umlenken einen Kombinierer (332) und/oder einen Teilbereich einer Windschutzscheibe (118) des Fahrzeugs (102) als eine Projektionsfläche umfasst.

3. Blickfeldanzeige (100) gemäß einem der vorangegangenen Ansprüche, bei der die Einrichtung (108) zum Umlenken ein holografisch-optisches Element (436) umfasst, insbesondere eine holografische Streuscheibe (434) umfasst.

4. Blickfeldanzeige (100) gemäß einem der vorangegangenen Ansprüche, bei der die Einrichtung (106) zum Bereitstellen einen ersten Bildgeber (224) zum Bereitstellen des ersten Bildes und/oder des zweiten Bildes und einen zweiten Bildgeber (538) zum Bereitstellen des zweiten Bildes und/oder einen Spiegel (226, 740) aufweist.

5. Blickfeldanzeige (100) gemäß einem der vorangegangenen Ansprüche, bei dem die Einrichtung (106) zum Bereitstellen einen Bildgeber (224) aufweist, der ausgebildet ist, das erste Bild und das zweite Bild bereitzustellen, wobei der Bildgeber (224) ausgebildet ist, das erste Bild und das zweite Bild zeitlich abwechselnd und/oder das erste Bild und das zweite Bild in zwei voneinander verschiedenen Teilbereichen einer Bildgeberfläche des Bildgebers (224) bereitzustellen.

6. Blickfeldanzeige (100) gemäß einem der vorangegangenen Ansprüche, bei der die Einrichtung (108) zum Umlenken ein holografisch-optisches Element (436) umfasst, wobei das holografisch-optische Element (436) eine Hohlspiegelfunktion (1148) für eine Reflexion des ersten Bildes unter einem ersten Einfallswinkel und eine Streuscheibenfunktion (1146) für eine Reflexion des zweiten Bildes unter einem von dem ersten Einfallswinkel verschiedenen zweiten Einfallswinkel aufweist, wobei der Einfallswinkel einen Winkel zwischen der ersten optischen Achse (110) und/oder der zweiten optischen Achse (112) und einer Oberfläche des holografisch-optischen Elements (436) repräsentiert.

7. Blickfeldanzeige (100) gemäß einem der vorangegangenen Ansprüche, bei dem die Einrichtung (108) zum Umlenken der Projektion ausgebildet ist, das erste Bild und/oder das zweite Bild als eine kontaktanaloge Anzeige für den Betrachter (104) darzustellen.

8. Blickfeldanzeige (100) gemäß einem der vorangegangenen Ansprüche, bei dem die Einrichtung (106) zum Bereitstellen ausgebildet ist, das erste Bild in einem ersten Wellenlängenbereich und das zweite Bild in einem zweiten Wellenlängenbereich bereitzustellen, wobei sich der erste Wellenlängenbereich und der zweite Wellenlängenbereich voneinander unterscheiden.

9. Blickfeldanzeige (100) gemäß einem der vorangegangenen Ansprüche, bei dem die Einrichtung (106) zum Bereitstellen ausgebildet ist, zumindest ein autostereoskopisches Bild zu erzeugen und/oder die Einrichtung (108) zum Umlenken autostereoskopisch ausgelegt ist.

10. Verfahren (1300) zum Darstellen von Bildinformationen in zwei unabhängigen Bildern für ein Fahrzeug (102), wobei das Verfahren (1300) die folgenden Schritte umfasst:
Bereitstellen (1310) von einem ersten Bild der zwei unabhängigen Bilder in einer ersten optischen Achse (110) und von einem zweiten Bild der zwei unabhängigen Bilder in einer von der ersten optischen Achse (110) zumindest abschnittsweise verschiedenen zweiten optischen Achse (112); und
Umlenken (1320) einer Projektion des ersten Bildes und/oder einer Projektion des zweiten Bildes, wobei die Einrichtung (108) zum Umlenken als zumindest eine teilweise transparente Projektionsfläche ausgebildet ist, die in der ersten optischen Achse (110) des ersten Bildes und/oder in der zweiten optischen Achse (112) des zweiten Bildes angeordnet ist, wobei die Projektion des ersten Bildes entlang der ersten optischen Achse (110) in Richtung des Betrachters (104) gelenkt wird und wobei die Projektion des zweiten Bildes entlang der zweiten optischen Achse (112) in Richtung des Betrachters (104) gelenkt wird.

11. Verfahren (1400) zum Herstellen einer Blickfeldanzeige (100) für ein Fahrzeug (102) zum Darstellen von Bildinformationen in zwei unabhängigen Bildern für einen Betrachter (104), wobei das Verfahren (1400) die folgenden Schritte umfasst:
Bereitstellen (1410) einer Einrichtung (106) zum Bereitstellen von einem ersten Bild der zwei unabhängigen Bilder in einer ersten optischen Achse (110) und von einem zweiten Bild der zwei unabhängigen Bilder in einer von der ersten optischen Achse (110) zumindest abschnittsweise verschiedenen zweiten optischen Achse (112) sowie einer Einrichtung (108) zum Umlenken einer Projektion des ersten Bildes und/oder einer Projektion des zweiten Bildes, wobei die Einrichtung (108) zum Umlenken als zumindest eine teilweise transparente Projektionsfläche ausgebildet ist; und
Anordnen (1420) der Einrichtung (106) zum Bereitstellen und der Einrichtung (108) zum Umlenken, derart, dass die Einrichtung (108) zum Umlenken in der ersten optischen Achse (110) des ersten Bildes und/oder in der zweiten optischen Achse (112) des zweiten Bildes angeordnet wird, sodass die Projektion des ersten Bildes entlang der ersten optischen Achse (110) in Richtung des Betrachters (104) gelenkt wird und wobei die Projektion des zweiten Bildes entlang der zweiten optischen Achse (112) in Richtung des Betrachters (104) gelenkt wird.
